# EUROPÄISCHE PATENTANMELDUNG

(11) **EP 0 563 918 A1**
(43) Veröffentlichungstag der Anmeldung: **06.10.1993**
(21) Anmeldenummer: 93105334.2
(22) Anmeldetag: 31.03.1993
(51) Int. Cl.: C08K 5/20, C08K 5/17, B29C 33/60, C08L 75/04

(54) **Polyurethan-Formmasse**

(30) Priorität: 02.04.1992 DE 4210921
(71) Anmelder: HOECHST AKTIENGESELLSCHAFT, D-65926 Frankfurt am Main (DE)
(72) Erfinder: Kiesel, Harald, D-86485 Biberbach (DE); Piesold, Jan-Peter, Dr., W-8900 Augsburg (DE); Heinrichs, Franz-Leo, Dr., W-8901 Gablingen (DE)

(57) **Zusammenfassung**

Das Kleben von Polyurethan-Formmassen an Maschinenteilen von Verarbeitungsmaschinen und Formwerkzeugen kann vermindert werden, wenn man den Formmassen als Trennmittel eine Verbindung der Formel

(R¹)ₙ-N-(CH₂-CH₂-OR²)₃₋ₙ

zufügt. Das Trennmittel ist ein Umsetzungsprodukt von langkettigen Carbonsäuren, vorzugsweise technischer Montansäure, mit Aminoalkoholen.

## Beschreibung

Die Erfindung bezieht sich auf eine Polyurethan-Formmasse, welche zur besseren Entformbarkeit ein bestimmtes organisches Amid mit erhöhter Migrationsfestigkeit enthält.

Sowohl verschäumte Polyurethan-Formmassen als auch thermoplastisch verarbeitbare Polyurethan-Formmassen neigen sehr stark zum Kleben an Maschinenteilen und an den Formwerkzeugen. Um dieses Kleben zu verhindern, werden häufig extern applizierte Trennmittel verwendet, die üblicherweise auf die Maschinenteile oder in das Formwerkzeug gesprüht werden. Um die gefertigten Kunststoffteile untereinander vor einem Zusammenkleben zu schützen, werden auch diese Teile mit externen Trennmitteln behandelt.

Da jedoch das Aufbringen eines äußerlichen Trennmittels einen zusätzlichen und aufwendigen Arbeitsschritt bedeutet, wird zunehmend versucht, mit sogenannten internen Trennmitteln zu arbeiten, welche homogen in die Polymermatrix eingearbeitet werden. Bei dieser Art von Trennmittel tritt allerdings, aufgrund von Unverträglichkeiten, der nachteilige Effekt des unerwünschten Ausblühens aus der Polymermatrix an die Oberfläche des gefertigten Kunststoffteils auf. Dadurch können schmierige Filme auf den Oberflächen entstehen, die nachfolgende Bearbeitungsschritte, wie beispielsweise das Lackieren, nur mit zusätzlichem Reinigungsaufwand ermöglichen.

Es ist bekannt, daß alle bisher bekannten Trennmittel, beispielsweise auch herkömmliche Montanwachse und niedermolekulare Fettsäurederivate, zur Belagsbildung neigen (vgl. US 4,889,908). Es wurden deswegen als Trennmittel Polyether, die durch Umsetzung eines substituierten 1,2-Epoxyalkans mit einem Polyol gewonnen werden können, vorgeschlagen.

Es bestand nun die Aufgabe, Trennmittel mit guter Wirkung und sehr geringer Neigung zur Migration zu finden.

Es wurde gefunden, daß Montanwachs-Derivate, die durch Umsetzung von Aminoalkoholen mit Montansäuren erhältlich sind, die Aufgabe zu lösen vermögen.

Die Erfindung betrifft somit eine Polyurethan-Formmasse, bestehend aus 90 bis 99,99 Gew.-%, bezogen auf die Formmasse, eines Polymeren, welches durch Reaktion einer bifunktionellen höhermolekularen Polyhydroxyverbindung mit einem bifunktionellen Kettenverlängerungsmittel und einem organischen Diisocyanat gewonnen wurde, und 0,01 bis 10 Gew.-%, bezogen auf die Formmasse, einer Verbindung der Formel

(R¹)ₙ-N-(CH₂-CH₂-OR²)₃₋ₙ,

worin R¹ gleich oder verschieden sein kann und ein Wasserstoffatom, eine C₁ bis C₁₈ -Alkylgruppe oder die Gruppe R³-CO-, worin R³ eine Alkylgruppe mit 23 - 35 C-Atomen ist, bedeutet, R² gleich oder verschieden sein kann und ein Wasserstoffatom oder die Gruppe R³-CO-, worin R³ die vorgenannte Bedeutung hat, bedeutet, n 0, 1 oder 2 ist und im Molekül mindestens eine Gruppe R³-CO-vorhanden ist.

Die erfindungsgemäße Polyurethan-Formmasse enthält ein Polymer, welches durch Reaktion von
A) im wesentlichen bifunktionellen, höhermolekularen Verbindungen mit im wesentlichen zwei aktiven Wasserstoffatomen und einer Molmasse von 400 bis 20 000, vorzugsweise höhermolekularen Polyhydroxylverbindungen,
B) im wesentlichen bifunktionellen Kettenverlängerungsmitteln wie Diolen oder Diaminen mit einer Molmasse von 32 bis 399,
C) organischen Diisocyanaten, vorzugsweise aromatischen Diisocyanaten,
D) unter Zusatz von gegebenenfalls Stabilisatoren und anderen, an sich bekannten Zusatzstoffen, gebildet werden.
Als Ausgangkomponenten für die Herstellung der Polyurethane kommen als A) im wesentlichen lineare, höhermolekulare Verbindungen mit vorwiegend zwei aktiven Wasserstoffatomen, d.h. praktisch alle an sich bekannten, etwa zwei reaktive Gruppen wie Hydroxyl-, primäre und/oder sekundäre Amino-, SH-, Carboxyl- und/oder andere reaktive Gruppen, z.B. Hydrazidgruppen enthaltenden Verbindungen, in Betracht. Es sind dies etwa bifunktionelle Hydroxypolyester, Hydroxypolylactone, Hydroxypolyether, Hydroxypolythioether, Hydroxpolyesteramide, Hydroxypolycarbonate, Hydroxyacetale oder Vinylpolymere mit Hydroxygruppen oder anderen Endgruppen oder bereits Urethan- und/oder - Harnstoffgruppen enthaltende Verbindungen. Diese Verbindungen entsprechen dem Stand der Technik und werden beispielsweise in der Literatur eingehend beschrieben.

Bevorzugt sind dies hydroxylgruppenhaltige, höhermolekulare Verbindungen, beispielsweise Polyesterdiole aus geradkettigen oder verzweigten aliphatischen und/oder cycloaliphatischen Diolen und aliphatischen Dicarbonsäuren, insbesondere Adipinsäure. Gegebenenfalls können auch höhermolekulare Polyaminoverbindungen, vorzugsweise mit primären aromatischen Aminogruppen, eingesetzt werden. Besonders bevorzugt werden als Polyole A) Adipinsäurepolyester oder Caprolactondiole oder Polycarbonatdiole, gegebenenfalls in Mischung mit Polyethern.

Die einzusetzenden Kettenverlängerungsmittel B) sind an sich bekannt und vielfach beschrieben. Es sind dies insbesondere niedermolekulare Polyalkohole, vorzugsweise Diole, Diamine, insbesondere (cyclo)-aromatische Diamine. Als Diamine seien 4,4-Diamino-dicyclohexylmethan, Isophorondiamin, Ethylendiamin und 1,3- oder 1,4-Diaminocyclohexan genannt. Bevorzugte Kettenverlängerungsmittel sind Diole wie z.B. Ethylenglykol, Hexandiol-1,6 und Hydrochinon-di-β-hydroryethylether, sowie Butandiol-1,4, gegebenenfalls in Gemischen mit anderen Diolen, insbesondere Hexandiol-1,6. Die Molmasse der Kettenverlängerer liegt bei 32 bis 399.

Ferner können monofunktionelle Verbindungen in von etwa 0,01 bis 3 Gew.-%, bezogen auf PU-Feststoff, als sogenannte Kettenabbrecher mitverwendet werden. Beispiele sind Monoalkohole wie Butanol, 2-Ethylenhexanol, Isobutanol, Octanol-1, Stearylalkohol oder Monoamine wie Anilin, Dibutylamin, N-Methylstearylamin oder Piperidin.

Zu verwendende Diisocyanate C) sind die an sich bekannten aliphatischen, cycloaliphatischen, araliphatischen, aromatischen oder heterocyclischen Diisocyanate des Standes der Technik. Bevorzugte Diisocyanate sind Hexamethylendiisocyanat, Isophorondiisocyanat, Naphthylen-1,5-diisocyanat, Tetramethyl-xylylendiisocyanat, 3,3-Dimethyl-4,4-diisocyanatodiphenyl (TODI), 1,4-Diisocyanatobenzol und das entsprechende hydrierte Produkt, Toluylendiisocyanate und insbesondere die Diphenylmethyldiisocyanat-Isomeren und die entsprechenden hydrierten Produkte. Zu nennen ist das 4,4-Diisocyanatodiphenylmethan oder sein Isomerengemisch. Die genannten Diisocyanate können gegebenfalls zusammen mit einem höherfunktionellen Polyisocyanat eingesetzt werden; die Menge des höherfunktionellen Polyisocyanats muß jedoch so begrenzt werden, daß ein noch schmelzbares bzw. thermoplastisches Polyurethanelastomeres erhalten wird. Beispiele für höherfunktionelle Isocyanate und monofunktionelle Verbindungen sind ebenfalls in der Literatur beschrieben. Beispielsweise seien Monoamine wie Butyl- oder Dibutylamin, Hydroxylamin, Stearylamin, N-Methylstearylamin, Pyrrolidon oder Tetrahexylamin bzw. Butanonoxim, sowie Monoalkohole wie Butanol-1, 2-Ethylhexanol-1, Dodecanol-1, Isobutanol oder t-Butanol, Cyclohexanol oder Ethylenglykolmonomethylether erwähnt.

Als Katalysatoren können z.B. tertiäre Amine, organische Metallverbindungen, insbesondere organische Zinn-, Blei- und Titanverbindungen eingesetzt werden, beispielsweise Zinn-II-acetat, Zinn-II-ethylhexoat, Dibutylzinndilaurat oder Bleiacetat.

Die Mengen an Reaktionskomponenten A) bis C) für die Polyurethane werden in der Regel so gewählt, daß das NCO/OH-Äquivalentverhältnis von Isocyanat zu OH-Verbindungen zwischen 0,9 und 1,2 liegt.

Neben dem Polymer enthält die erfindungsgemäße Polyurethan-Formmasse als Trennmittel eine Verbindung der Formel

(R¹)ₙ-N-(CH₂-CH₂-OR²)₃₋ₙ,

worin R¹ gleich oder verschieden sein kann und ein Wasserstoffatom, eine C₁ bis C₁₈-Alkylgruppe, vorzugsweise Wasserstoffatom, oder die Gruppe R³-CO-, worin R³ eine Alkylgruppe mit 23 - 35, vorzugsweise 27-31 C-Atomen ist, bedeutet, R² gleich oder verschieden sein kann und ein Wasserstoffatom oder die Gruppe R³-CO-, worin R³ die vorgenannte Bedeutung hat, bedeutet, n 0, 1 oder 2, vorzugsweise 1 ist und im Molekül mindestens eine Gruppe R³-CO- vorhanden ist. Vorzugsweise ist die Gruppe R³-CO- der Rest einer technischen Montansäure, die durch oxidative Bleichung von Rohmontanwachs gewonnen wurde und ein Gemisch von C₂₄ - C₃₆-Carbonsäuren mit Schwerpunkt C₂₈ - C₃₂ ist und etwa 15 Gew.-% Dicarbonsäuren enthält.

Die Hersteliung der erfindungsgemäß zu verwendenden Verbindungen erfolgt durch Umsetzung von C₂₄ - C₃₆ - Carbonsäuren, vorzugsweise technischer Montansäure, mit Aminoalkoholen der Formel

(R¹)ₙ-N-(CH₂-CH₂-OH)_{3-n,}

worin R¹ und n die vorgenannte Bedeutung haben, nach üblichen Veresterungs- und Amidierungsmethoden.

Geeignete Aminoalkohole sind Ethanolamin, Diethanolamin, Triethanolamin und ihre Alkylderivate. Geeignete C₂₄ - C₃₆ - Carbonsäuren sind beispielsweise Tetracosansäure, Cerotinsäure, Montansäure, Melissinsäure, vorzugsweise technische Montansäure, die durch oxidative Bleichung von Rohmontanwachs gewonnen wurde und ein Gemisch von C₂₄ - C₃₆ - Carbonsäuren mit Schwerpunkt C₂₈ bis C₃₂ ist und etwa 15 Gew.-% Dicarbonsäuren enthält.

Die Verbindungen sind wachsartige Körper mit Tropfpunkten von etwa 60 bis 120 °C.

Die erfindungsgemäße Polyurethan-Formmasse besteht zu 90 bis 99,99, vorzugsweise 97 bis 99,9 Gew.-% aus dem Polymer und zu 0,01 bis 10, vorzugsweise 0,1 bis 3,0 Gew.-% aus dem erfindungsgemäß zu verwendenden Trennmittel.

Zusätzlich kann die Polyurethan-Formmasse Antioxidantien, Lichtschutzmittel, Metalldesaktivatoren, Stabilisatoren, Treibmittel, Füllstoffe, Verstärkungsmittel, Gleitmittel, Pigmente, optische Aufheller, Flammschutzmittel oder Antistatika enthalten.n

Das Einmischen der erfindungsgemäßen Trennmittel in die Polyurethan-Formmasse geschieht auf die bei der Kunststoff-Verarbeitung übliche Weise, beispielsweise durch Einmischen der Verbindungen und gegebenenfalls weiterer Additive in die Schmelze vor der Formgebung. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kamnn die Einarbeitung erfolgen. Möglich ist auch die Verwendung von Extrudern oder Knetern zur Compoundierung, oder das physikalische Mischen in z. B. langsam laufenden Mischern.

Die nachfolgenden Beispiele sollen die vorliegende Erfindung erläutern:

### Beispiel 1

### Umsetzung von technischer Montansäure mit Diethanolamin im molaren Verhältnis 2,25 :1

Die technische Montansäure wurde in einen Reaktor gegeben und unter N₂-Atmosphäre aufgeschmolzen. Bei einer Temperatur von 90 bis 100°C wurde das Diethanolamin zudosiert. Das Gemisch wurde auf 140°C erhitzt und solange bei dieser Temperatur gerührt, bis die Säurezahl unter 15 mg KOH/g gesunken war. Anschließend wurde die Schmelze abgekühlt und gemahlen.
Tropfpkt. ca 82°C; Säurezahl ca 12 mg KOH/g; Verseifungszahl ca. 135 mg KOH/g; Fließhärte ca. 550 bar.

### Beispiel 2

### Umsetzung von technischer Montansäure mit Talgfettdiethanolamin im molaren Verhältnis von 1,6 : 1

Die technische Montansäure wurde in den Reaktor gegeben und unter N₂-Atmosphäre aufgeschmolzen. In die 90 bis 100°C heiße Schmelze wurde das Talgfettdiethanolamin (R¹ = Rest des Talgfettalkohols) langsam zugegeben. Danach wurde die Mischung auf 140°C erhitzt und bei dieser Temperatur solange gerührt, bis die Säurezahl unter 15 mg KOH/g gesunken war. Danach wurde die Schmelze abgekühlt und gemahlen.
Tropfpunkt ca. 75°C; Säurezahl ca. 12 mg KOH/g; Verseifungszahl ca. 100 mg KOH/g; Fließhärte ca. 60 bar.

### Beispiel 3

Für die Migrations-Prüfung wurden 1 mm-Plättchen mit den Maßen 60 x 60 mm hergestellt, die Plastizierung und Homogenisierung erfolgte mittels eines Kneters, die anschließende Formgebung wurde mit einer Presse durchgeführt. Die so erhaltenen Probekörper wurden frei in einen Umluftofen gehängt und für 24 h bei 100 °C getempert. Nach diesen 24 h wurden die Probekörper nach den Kriterien "sichtbarer" und "spürbarer" Belag beurteilt.

Für die Charakterisierung der Trennwirkung wurde das Ablöseverhalten von 1 mm-Plättchen auf Stahlblechen bewertet. Dazu wurde nach einem Preßvorgang (150 °C, 100 bar, 180 s) der erhaltene Probekörper mit der Hand von dem zwischengelegten Stahlblech abgezogen. Die Bewertung wurde subjektiv erfasst und in einem Vergleichsmaßstab eingeordnet.

Als Polymer wurden ein Polyesterpolyurethan mit einer Shore-Härte A von 93 und einer Dichte (23 °C) von 1,19 g/cm³ und ein Polyetherpolyurethan mit einer Shore-Härte A von 85 und einer Dichte (23 °C) von 1,12 g/cm³ eingesetzt.
Die Ergebnisse sind in folgender Tabelle zusammengefasst.
Probekörper:
1 mm-Preßplatten, Additivzugabe 1 %
Migrationsuntersuchungen nach 24 h bei 100 °C, Kriterium Belagsbildung
Trennwirkung: Ablöseverhalten 1 m-Plättchen von Stahlblech nach vorhergehendem Preßvorgang

**Tabelle**

| Beispiel | Polyesterurethan | | Polyetherurethan | |
|---|---|---|---|---|
| | Belagsbildung | Ablöseverhalten | Belagsbildung | Ablöseverhalten |
| Vergl. A | keine | schlecht | keine | schlecht |
| Vergl. B | gering | gut | gering | gut |
| Vergl. C | mittel | sehr gut | mittel | sehr gut |
| Vergl. D | gering | gut | gering | mittel |
| Vergl. E | gering | mittel | gering | mittel |
| Beispiel 1 | keine | gut | keine | gut |
| Beispiel 2 | keine | gut | keine | gut |
| Vergl. A : Ohne Additiv Vergl. B : Ethandiolester der Montansäure Vergl. C : Ethylendiamid der Stearinsäure Vergl. D : Trimethylolpropanester der Montansäure Vergl. E : Pentaerythritester der Montansäure Beurteilungsschema: keine - geringe - mittlere - starke Belagsbildung schlechtes - mittleres - gutes - sehr gutes Ablöseverhalten | | | | |

## Patentansprüche

1. Polyurethan-Formmasse, bestehend aus 90 bis 99,99 Gew.-%, bezogen auf die Formmasse, eines Polymeren, welches durch Reaktion einer bifunktionellen höhermolekularen Polyhydroxyverbindung mit einem bifunktionellen Kettenverlängerungsmittel und einem organischen Diisocyanat gewonnen wurde, und 0,01 bis 10 Gew.-%, bezogen auf die Formmasse, einer Verbindung der Formel
(R¹)ₙ-N-(CH₂-CH₂-OR²)₃₋ₙ,
worin R¹ gleich oder verschieden sein kann und ein Wasserstoffatom, eine C₁ bis C₁₈ -Alkylgruppe oder die Gruppe R³-CO-, worin R³ eine Alkylgruppe mit 23 - 35 C-Atomen ist, bedeutet, R² gleich oder verschieden sein kann und ein Wasserstoffatom oder die Gruppe R³-CO-, worin R³ die vorgenannte Bedeutung hat, bedeutet, n 0, 1 oder 2 ist und im Molekül mindestens eine Gruppe R³-CO- vorhanden ist.

2. Polyurethan-Formmasse nach Anspruch 1, dadurch gekennzeichnet, daß R³-CO- ein Rest der technischen Montansäure ist, welche bei der oxidativen Bleichung von Rohmontanwachs entsteht, und ein Gemisch von C₂₄ bis C₃₆ - Carbonsäuren mit Schwerpunkt C₂₈ bis C₃₂ ist und etwa 15 Gew.-% Dicarbonsäuren enthält.

3. Polyurethan-Formmasse nach Anspruch 1, dadurch gekennzeichnet, daß sie zusätzlich Antioxidantien, Lichtschutz:mittel, Metalldesaktivatoren, Stabilisatoren, Treibmittel, Füllstoffe, Verstärkungsmittel, Gleitmittel, optische Aufheller, Flammschutzmiftel, Pigmente, Färbemittel oder Farbstoffe enthält.

4. Verfahren zur Verminderung des Klebens von Polyurethan-Formmassen an den Verarbeitungsmaschinen durch Zugabe eines Trennmittels, dadurch gekennzeichnet, daß man 0,01 bis 10 Gew.-%, bezogen auf die Formmasse, einer Verbindung der Formel
(R¹)ₙ-N-(CH₂-CH₂-OR²)₃₋ₙ,
worin R¹ gleich oder verschieden sein kann und ein Wasserstoffatom, eine C₁ bis C₁₈ -Alkylgruppe oder die Gruppe R³-CO-, worin R³ eine Alkylgruppe mit 23 - 35 C-Atomen ist, bedeutet, R² gleich oder verschieden sein kann und ein Wasserstoffatom oder die Gruppe R³-CO-, worin R³ die vorgenannte Bedeutung hat,bedeutet, n 0, 1 oder 2 ist und im Molekül mindestens eine Gruppe R³-CO- vorhanden ist, dem Polymer zufügt.

5. Verfahren nach Anspruch 3, dadurch gekennzeichnet, daß man eine Verbindung zufügt, in deren Molekül R³-CO- ein Rest der technischen Montansäure ist, welche bei der oxidativen Bleichung von Rohmontanwachs entsteht, und ein Gemisch von C₂₄ bis C₃₆ - Carbonsäuren mit Schwerpunkt C₂₈ bis C₃₂ ist und etwa 15 Gew.-% Dicarbonsäuren enthält.
